# FASCICULE DE BREVET EUROPEEN

(11) **EP 0 563 955 B1**
(45) Date de publication et mention de la délivrance du brevet: **18.10.1995**
(21) Numéro de dépôt: 93105412.6
(22) Date de dépôt: 01.04.1993
(51) Int. Cl.: F24H 1/14, B23K 9/173

(54) **Procédé de fabrication d'un chauffe-eau à circulation pour distributeur de boissons chaudes**
Verfahren zur Herstellung eines Durchlauferhitzers für Ausgabevorrichtung für warme Getränke
Method of manufacturing a continuous heater for dispenser for hot beverages

(30) Priorité: 02.04.1992 FR 9204035
(43) Date de publication de la demande: 06.10.1993
(73) Titulaire: MOULINEX S.A., F-93170 Bagnolet (FR)
(72) Inventeur: Schiettecatte, Patrice Jean Cornelius, F-61250 Lonrai (FR)
(74) Mandataire: May, Hans Ulrich, Dr.

(56) Documents cités:
- EP-A- 0 442 475
- DE-B- 1 234 883
- DE-U- 8 905 005
- FR-A- 2 270 046

## Description

L'invention se rapporte à un procédé de fabrication d'un chauffe-eau à circulation pour distributeur de boissons chaudes telles que café et thé, ledit chauffe-eau comprenant un corps de chauffe électrique tubulaire conformé sensiblement en U et un tube de conduite d'eau destiné à être relié mécaniquement et thermiquement au corps de chauffe par soudage.

Un tel chauffe-eau est décrit dans le document DE-U-89 05 005.

D'une manière générale, le tube de conduite d'eau est soudé au corps de chauffe par fusion d'un métal d'apport, ce qui apporte une bonne adhésion. L'inconvénient du brasage réside dans le fait que le métal d'apport, par exemple un alliage d'aluminium au silicium, est différent du matériau du tube et du corps, en général en aluminium. En effet, le métal d'apport doit avoir un point de fusion beaucoup plus bas (580°C) que celui dudit matériau (660°C). Il n'y a pas donc pratiquement pas de fusion dudit matériau, mais seulement une très légère pénétration du métal d'apport par capillarité dans ledit matériau. Ceci a pour résultat de former un milieu discontinu constituant un frein au passage du flux d'énergie calorifique. De plus, le brasage est un procédé long et coûteux. En effet, il est nécessaire d'une part, de sertir une plaque de jonction autour du corps et du tube pour assurer la liaison mécanique pendant l'opération de brasage, et d'autre part de décaper les pièces et de cuire au four (environ deux heures) l'ensemble corps-cordon de soudure-tube. Ce procédé consomme aussi beaucoup d'énergie. Dans d'autres chauffe-eau connus, le corps de chauffe et le tube de conduite d'eau sont formés d'une seule pièce par extrusion et reliés entre eux par une cloison qui permet un bon transfert thermique. L'inconvénient majeur d'un tel procédé est de ne pas pouvoir utiliser toutes les dimensions et formes souhaitées pour le bitube constitué par la cloison, le corps et le tube. En effet, le cintrage du tube pour obtenir une conformation en U, d'une part, nécessite de donner à la cloison une longueur et un positionnement particuliers et, d'autre part, ne permet pas d'utiliser un tube de conduite d'eau de diamètre très important.

L'invention a pour but de remédier à ces inconvénients et, en particulier, d'offrir un procédé d'assemblage entre le corps de chauffe et le tube de conduite d'eau qui soit facilement adaptable à différents types de cafetières, qui assure une excellente liaison thermique et mécanique et qui soit rapide tout en permettant d'utiliser différentes formes et dimensions pour le corps et le tube.

Selon l'invention, on cintre séparément le corps de chauffe et le tube de conduite d'eau respectivement selon deux arcs de cercle homothétiques ; puis on soude à l'arc électrique sous flux de gaz neutre le tube de conduite d'eau au corps de chauffe selon une zone ménagée entre ledit corps et ledit tube.

Ainsi, grâce à la soudure à l'arc sous flux de gaz neutre, on obtient une bonne liaison mécanique et un excellent transfert thermique entre le corps de chauffe et le tube de conduite d'eau. En effet, ce procédé provoque la fusion d'une partie du matériau des pièces à souder et il y a donc diffusion entre les matériaux des pièces à souder, et éventuellement entre lesdits matériaux et un métal d'apport extérieur. Ainsi l'énergie thermique traverse un milieu continu depuis le corps de chauffe vers le tube de conduite d'eau. De plus, par le choix du rapport d'homothétie entre le corps de chauffe et le tube de conduite d'eau, ce procédé n'impose pas de contraintes de formes et de dimensions pour le corps de chauffe et le tube de conduite d'eau.

Par ailleurs, ce procédé est relativement économique car la consommation en gaz neutre, en métal d'apport éventuel et en énergie électrique est assez faible. Le procédé peut être aisément robotisé dans le cas d'une fabrication en grande série. De plus, il est particulièrement rapide puisqu'il ne nécessite aucune préparation et que l'opération de soudure ne prend que quelques secondes.

Les caractéristiques et avantages de l'invention ressortiront d'ailleurs de la description qui va suivre, à titre d'exemple, en référence aux dessins annexés dans lesquels :

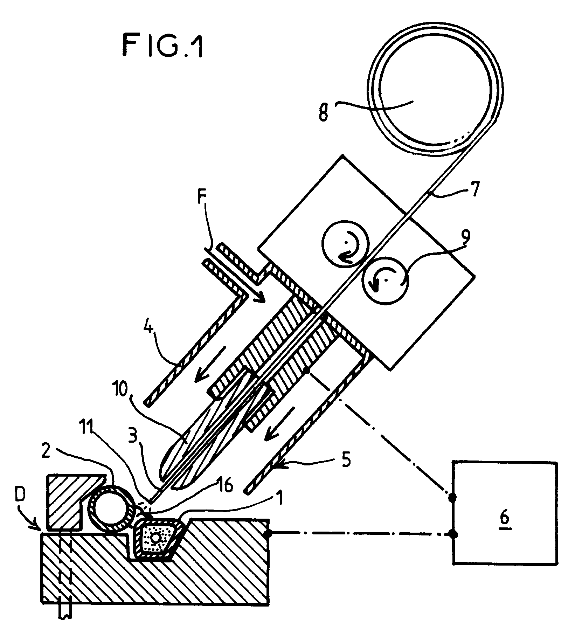

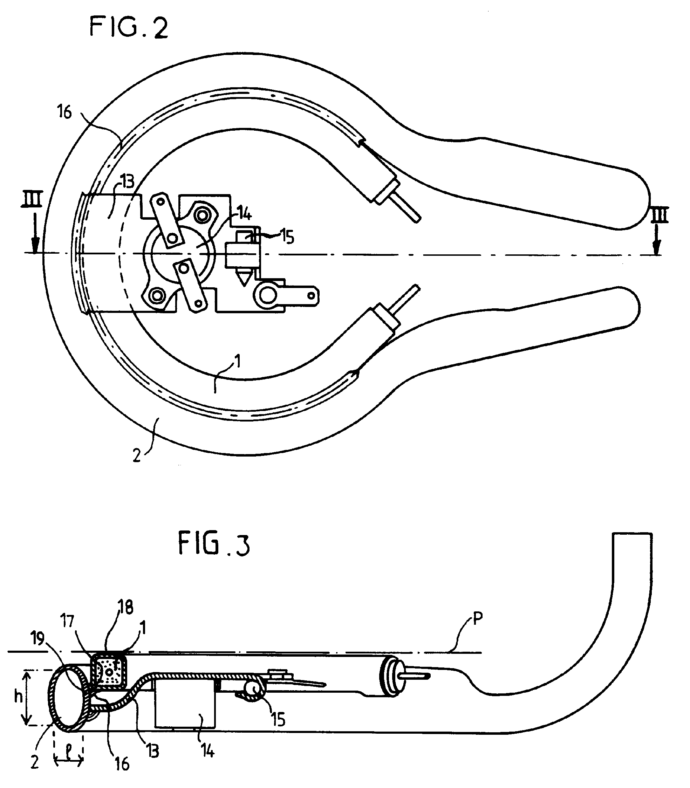

la figure 1, illustre schématiquement le procédé de fabrication d'un chauffe-eau selon l'invention ; la figure 2 est une vue de dessous d'un chauffe-eau selon l'invention ; la figure 3 est une coupe selon la ligne III - III de la figure 2.

Le procédé tel qu'illustré sur la figure 1 est destiné à la fabrication d'un chauffe-eau à circulation qui est destiné à être monté dans un distributeur de boissons chaudes telles que café et thé et qui comprend un corps de chauffe électrique tubulaire 1 conformé sensiblement en U et un tube de conduite d'eau 2 destiné à être relié mécaniquement et thermiquement au corps de chauffe.

Selon l'invention, on cintre séparément le corps de chauffe 1 et le tube de conduite d'eau 2 selon des courbes homothétiques; on place le corps 1 et le tube 2 de façon pratiquement adjacente dans un dispositif de maintien provisoire D ; puis on relie le tube de conduite d'eau 2 au corps de chauffe 1 par une soudure à l'arc électrique sous flux de gaz neutre. On utilise, par exemple, de l'argon ou un mélange argon - hélium. Le gaz neutre évite la formation d'oxyde sur le métal en fusion. L'arc électrique est provoqué entre ledit corps et ledit tube et une électrode 3 disposée dans un conduit 4 où circule ledit gaz (selon les flèches F), pour constituer ainsi une torche de soudage 5.

Les pièces à souder et l'électrode sont à cet effet reliées à une source de courant 6 dont l'intensité est d'environ 150 A et dont la tension est de 16 à 18 V. L'avantage de la soudure à l'arc est de fournir une chaleur suffisante pour provoquer la fusion du matériau, par exemple l'aluminium, des pièces à souder. On peut ainsi, sans métal d'apport extérieur faire simplement fondre le matériau d'une partie des pièces à souder, qui se mélangent de manière à former un milieu continu n'offrant aucune barrière à l'énergie thermique. Dans le cas d'un corps de chauffe dont la section est polygonale, la liaison intime constituée par la fusion du matériau est avantageusement effectuée dans une région angulaire dudit corps.

Mais on relie avantageusement le tube de conduite d'eau 2 au corps de chauffe 1 à l'aide d'un métal d'apport 7 destiné à fondre sous l'effet de l'arc électrique. Ce métal d'apport va lui-même se mélanger au matériau des pièces à souder pour former un milieu continu. Ainsi, dans le cas où le corps de chauffe et le tube de conduite d'eau sont tous deux en aluminium, on utilise de préférence un métal d'apport 7 de même nature que celle du matériau du corps de chauffe et du tube de conduite d'eau, en l'occurence de l'aluminium. Selon une variante pour laquelle le corps de chauffe est en acier, de préférence protégé contre l'oxydation par une fine couche par exemple de cuivre, tandis que le tube de conduite d'eau est en acier inoxydable, on utilise alors avantageusement comme métal d'apport 7 un cupro-aluminium (alliage de cuivre + 8% environ d'aluminium) ou un cupro-étain (alliage de cuivre + 1% environ d'étain), chacun d'eux présentant une excellente conductibilité thermique.

Selon une caractéristique particulièrement avantageuse de l'invention, comme on le voit sur la figure 1, le métal d'apport utilisé 7 se présente sous la forme d'un fil bobiné constituant l'électrode 3 . On dévide en continu l'électrode 3 par l'intérieur du conduit 4 de la torche de soudage 5, à partir d'une bobine 8 et, par exemple, grâce à des galets rotatifs motorisés 9. A l'intérieur du conduit 4 dans lequel circule le gaz neutre, le fil est maintenu en position grâce à un guide 10 qui sert également de contact électrique avec la source de courant 6.

L'arc électrique se produit à l'extrémité libre 11 du fil (soudure de type M.I.G. - Metal Inert Gas).

Le tube de conduite d'eau 2 et le corps de chauffe 1 sont maintenus pendant l'opération de soudage par un dispositif de maintien provisoire D qui sert aussi de contact électrique avec la source de courant 6.

Selon un autre mode de réalisation de l'invention (non représenté) on amène le métal d'apport en continu par l'extérieur de la torche de soudage et l'on utilise alors une électrode en tungstène (soudure de type T.I.G - Tungsten Inert Gas).

Ce procédé de fabrication peut aisément être robotisé. En effet, il suffit que la torche de soudage 5 soit guidée par un robot (non représenté) pour suivre la forme du corps de chauffe 1 et du tube de conduite d'eau 2, on peut donc utiliser des formes quelconques. Mais il est avantageux de cintrer préalablement le corps de chauffe 1 et le tube de conduite d'eau 2 respectivement selon deux arcs de cercle homothétiques. On peut alors souder selon la zone ménagée entre ledit corps et ledit tube, cette zone ayant elle-même la forme d'un arc de cercle. Ceci permet d'utiliser une torche de soudage fixe. On place alors le dispositif de maintien du tube de conduite d'eau et le corps de chauffe sur un plateau rotatif. Il suffit donc de faire tourner le plateau par rapport à la torche pendant l'opération de soudage pour obtenir une soudure en arc de cercle. Cette solution est particulièrement économique.

Comme on le voit mieux sur les figures 2 et 3, le chauffe-eau comportant en outre un support 13 pour un thermostat 14 et un fusible 15, on soude le support 13 au tube de conduite d'eau également par soudure à l'arc électrique sous flux de gaz neutre.

Ainsi, le bon transfert thermique réalisé grâce à la soudure à l'arc permet d'obtenir une réponse rapide du thermostat 14 et du fusible 15, et donc d'améliorer la sécurité.

Le chauffe-eau, représenté aux figures 2 et 3 et obtenu par le procédé selon l'invention, comprend le corps de chauffe 1 et le tube de conduite d'eau 2, qui sont reliés entre eux par un cordon de soudure 16 provenant de la fusion du métal d'apport 7.

La soudure à l'arc permet d'utiliser des pièces de dimensions et de formes quelconques et de disposer le cordon de soudure 16 à un endroit idéal pour obtenir un bon transfert thermique.

Dans un mode de réalisation préféré, le corps de chauffe 1, qui est en général cylindrique au départ, est compacté préalablement au cintrage de manière que sa section ait une forme polygonale. Le cordon de soudure entre le corps de chauffe 1 et le tube de conduite d'eau 2 est alors déposé dans une région angulaire 17 dudit corps de chauffe 1, de manière à obtenir une zone de bon contact thermique avec le tube de conduite d'eau.

La forme polygonale permet d'obtenir une surface supérieure plane 18 sur laquelle pourra être posée une plaque P de maintien au chaud destinée à maintenir au chaud l'infusion, et ainsi, on améliore le transfert thermique entre le corps de chauffe et ladite plaque. De plus, la forme polygonale permet d'éviter lors du cintrage que le corps de chauffe ne se vrille. Dans la pratique, on utilise, par exemple, une section parallèlèpipédique ayant une hauteur d'environ 9 ou 10 mm.

La soudure à l'arc permet aussi d'utiliser des tubes de conduite d'eau de différentes dimensions. L'augmentation de la section du tube permet d'augmenter la puissance électrique et donc le débit d'eau sans faire varier beaucoup la température (environ 95°C).

De préfèrence, on conforme la section du tube de conduite d'eau de manière oblongue selon un axe vertical, le cordon de soudure entre le tube et le corps s'étend alors d'une région angulaire inférieure 17 du corps de chauffe jusqu'à la région médiane 19 du tube de conduite d'eau. Ainsi, les bulles de vapeur formées au contact de cette région médiane 19 se détachent de la paroi pour s'élever dans la partie supérieure, les bulles étant remplacées par de l'eau qui est ainsi continuellement renouvelée.

Ainsi, alors que l'on utilisait habituellement un tube cylindrique de diamètre intérieur de 9 à 10 mm pour une puissance de 800 Watt environ, on peut ici utiliser, pour obtenir une puissance supérieure à 1000 Watt par exemple, un tube oblong ayant une largeur interne l de 10 à 12 mm pour une hauteur interne h de 14 à 16mm.

En effet, il est important de disposer le cordon de soudure 16 dans la région médiane 19 proche de la mi-hauteur du tube de conduite d'eau. Cela permet de maintenir un contact prolongé entre l'eau et la région latérale chaude, puisque l'on évite que le transfert thermique ait lieu dans la partie supérieure du tube où se formerait un matelas de vapeur isolant l'eau de la région chaude.

Dans l'exemple de réalisation, la région angulaire inférieure 17 est située environ à 9-10 mm de la plaque de maintien au chaud, tandis que la partie médiane du tube est située à 7-8 mm de la partie supérieure du tube. La partie supérieure du tube est donc située en dessous de la surface supérieure plane 18 du corps de chauffe et donc en dessous de la plaque P de maintien au chaud.

## Revendications

1. Procédé de fabrication d'un chauffe-eau à circulation qui est destiné à être monté dans un distributeur de boissons chaudes telles que café et thé et qui comprend un corps de chauffe électrique tubulaire (1) conformé sensiblement en U et un tube de conduite d'eau (2) destiné à être relié mécaniquement et thermiquement au corps de chauffe par soudage,
**caractérisé en ce que** l'on cintre séparément le corps de chauffe (1) et le tube de conduite d'eau (2) respectivement selon deux arcs de cercle homothétiques ; puis on soude à l'arc électrique sous flux de gaz neutre le tube de conduite d'eau (2) au corps de chauffe (1) selon une zone ménagée entre ledit corps et ledit tube.

2. Procédé selon la revendication 1,
**caractérisé en ce que** l'on relie le tube de conduite d'eau (2) au corps de chauffe (1) à l'aide d'un métal d'apport (7) destiné à fondre sous l'effet de l'arc électrique provoqué entre ledit tube et ledit corps et une électrode (3) disposée dans un conduit (4) où circule ledit gaz, pour constituer ainsi une torche de soudage (5).

3. Procédé selon la revendication 2,
**caractérisé en ce que** l'on utilise un métal d'apport (7) de même nature que celle du matériau du corps de chauffe (1) et du tube de conduite d'eau (2).

4. Procédé selon la revendication 3,
**caractérisé en ce que** le corps de chauffe (1) et le tube de conduite d'eau (2) étant en aluminium, le métal d'apport (7) est de l'aluminium.

5. Procédé selon la revendication 2,
**caractérisé en ce que** le corps de chauffe (1) étant en acier et le tube de conduite d'eau (2) en acier inoxydable, le métal d'apport (7) est un cupro-aluminium.

6. Procédé selon la revendication 2,
**caractérisé en ce que** le corps de chauffe (1) étant en acier et le tube de conduite d'eau (2) en acier inoxydable, le métal d'apport (7) est un cupro-étain.

7. Procédé selon l'une des revendications 2 à 6,
**caractérisé en ce que** le métal d'apport (7) se présentant sous la forme d'un fil bobiné constituant l'électrode (3), on dévide en continu l'électrode (3) par l'intérieur du conduit (4) de la torche de soudage (5).

8. Procédé selon l'une des revendications 2 à 6,
**caractérisé en ce que** l'on amène le métal d'apport (7) en continu par l'extérieur de la torche de soudage (5) et l'on utilise une électrode en tungstène.

9. Procédé selon l'une quelconque des revendications précédentes,
**caractérisé en ce que**, le chauffe-eau comportant en outre un support (13) pour un thermostat (14) et un fusible (15), on soude le support (13) au tube de conduite d'eau (2) également par soudure à l'arc électrique sous flux de gaz neutre.

## Patentansprüche

1. Verfahren zur Herstellung eines zum Einbau in einen Spender für heiße Getränke wie Kaffee oder Tee bestimmten Wasser-Durchlauferhitzers mit einem rohrförmigen elektrischen Heizkörper (1), welcher zu einem U geformt ist, und einem Wasserdurchflußrohr (2), das mechanisch und thermisch mit dem Heizkörper durch Schweißen verbunden ist, **dadurch gekennzeichnet**, **daß** der Heizkörper (1) und das Wasserdurchflußrohr (2) separat jeweils entsprechend zwei homothetischen Kreisbögen gebogen und danach mittels Lichtbogenschweißen unter Inertgasstrom das Wasserdurchflußrohr (2) und der Heizkörper (1) in einem Bereich zwischen dem Heizkörper und dem Wasserdurchflußrohr miteinander verschweißt werden.

2. Verfahren nach Anspruch 1, **dadurch gekennzeichnet, daß** das Wasserdurchflußrohr (2) und der Heizkörper (1) mittels eines durch den Lichtbogen zum Schmelzen gebrachten Zusatzmetalls (7) verbunden werden, wobei der Lichtbogen zwischen dem Durchflußrohr und dem Heizkörper und einer Elektrode (3) erzeugt wird, die in einer Leitung (4) angebracht ist, durch welche das Gas strömt, wodurch ein Schweißbrenner (5) gebildet wird.

3. Verfahren nach Anspruch 2, **dadurch gekennzeichnet, daß** das Zusatzmetall (7) von der gleichen Art wie das Material des Heizkörpers (1) und des Wasserdurchflußrohrs (2) ist.

4. Verfahren nach Anspruch 3, **dadurch gekennzeichnet, daß** bei einem Heizkörper (1) und einem Wasserdurchflußrohr (2) aus Aluminium das Zusatzmetall (7) Aluminium ist.

5. Verfahren nach Anspruch 2, **dadurch gekennzeichnet, daß** bei einem Heizkörper (1) aus Stahl und einem Wasserdurchflußrohr (2) aus Edelstahl das Zusatzmetall (7) ein Aluminiumkupfer ist.

6. Verfahren nach Anspruch 2, **dadurch gekennzeichnet, daß** bei einem Heizkörper (1) aus Stahl und einem Wasserdurchflußrohr (2) aus Edelstahl das Zusatzmetall (7) ein Zinnkupfer ist.

7. Verfahren nach einem der Ansprüche 2 bis 6, **dadurch gekennzeichnet**, **daß** das Zusatzmetall (7) in Form eines aufgewickelten Drahts vorliegt, der die Elektrode (3) bildet, und die Elektrode (3) durch das Innere der Leitung (4) des Schweißbrenners (5) kontinuierlich abgegeben wird.

8. Verfahren nach einem der Ansprüche 2 bis 6, **dadurch gekennzeichnet**, **daß** das Zusatzmetall (7) von außerhalb des Schweißbrenners (5) kontinuierlich zugeführt wird und daß eine Wolfram-Elektrode verwendet wird.

9. Verfahren nach einem der vorangehenden Ansprüche, **dadurch gekennzeichnet, daß** der Wasserdurchlauferhitzer außerdem noch eine Halterung (13) für einen Thermostaten (14) und eine Sicherung (1 5) aufweist, wobei die Halterung (13) ebenso durch Lichtbogenschweißen unter Inertgasstrom mit dem Wasserdurchflußrohr (2) verbunden wird.

## Claims

1. Method for manufacturing a circulation water heater intended to be mounted in a dispenser for hot drinks such as coffee and tea and which comprises a tubular electric heating body (1) substantially in a U shape and a water feed tube (2) intended to be connected mechanically and thermally to the heating body by welding,
**characterized in that** the heating body (1) and the water feed tube (2) respectively are bent separately into two homothetic arcs of a circle; then electric arc welding under a flow of neutral gas is carried out to join the water feed tube (2) to the heating body (1) over an area between the said body and the said tube.

2. Method according to Claim 1,
**characterized in that** the water feed tube (2) is connected to the heating body (1) by means of a filler metal (7) intended to melt under the effect of the electric arc produced between the said tube and the said body and an electrode (3) disposed in a pipe (4) carrying the said gas so as thus to constitute a welding torch (5).

3. Method according to Claim 2,
**characterized in that** a filler metal (7) of the same nature as the material constituting the heating body (1) and the water feed tube (2) is used.

4. Method according to Claim 3,
**characterized in that**, the heating body (1) and the water feed tube (2) being aluminium, the filler metal (7) is aluminium.

5. Method according to Claim 2,
**characterized in that**, the heating body (1) being steel and the water feed tube (2) stainless steel, the filler metal (7) is a cupro-aluminium.

6. Method according to Claim 2,
**characterized in that**, the heating body (1) being steel and the water feed tube (2) stainless steel, the filler metal (7) is a cupro-tin.

7. Method according to one of Claims 2 to 6,
**characterized in that**, the filler metal (7) being in the form of a coiled wire constituting the electrode (3), the electrode (3) is payed out continuously through the interior of the pipe (4) of the welding torch (5).

8. Method according to one of Claims 2 to 6,
**characterized in that** the filler metal (7) is supplied continuously from the exterior of the welding torch (5) and a tungsten electrode is used.

9. Method according of any one of the preceding claims, **characterized in that**, the water heater also having a support (13) for a thermostat (14) and a fuse (15), the support (13) is welded to the water feed tube (2) also by electric arc welding under a flow of neutral gas.
